(19) Europäisches Patentamt / European Patent Office / Office européen des brevets

(11) **EP 2 942 287 B1**

(12) **FASCICULE DE BREVET EUROPEEN**

(45) Date de publication et mention
de la délivrance du brevet:
**23.10.2019 Bulletin 2019/43**

(51) Int Cl.:
**B64G 1/10** *(2006.01)*    **B64G 1/28** *(2006.01)*

(21) Numéro de dépôt: **15150494.1**

(22) Date de dépôt: **28.03.2011**

(54) **Procédé de commande d'un système de contrôle d'attitude et système de contrôle d'attitude d'un véhicule spatial**

VERFAHREN ZUR STEUERUNG EINES HÖHENKONTROLLSYSTEMS, UND HÖHENKONTROLLSYSTEM EINES RAUMFAHRZEUGS

METHOD FOR CONTROLLING AN ATTITUDE CONTROL SYSTEM AND ATTITUDE CONTROL SYSTEM OF A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2010 FR 1052277**

(43) Date de publication de la demande:
**11.11.2015 Bulletin 2015/46**

(62) Numéro(s) de document de la (des) demande(s)
initiale(s) en application de l'article 76 CBE:
**11710219.4 / 2 552 782**

(73) Titulaires:
• **Airbus Defence and Space SAS**
  **31402 Toulouse Cedex 4 (FR)**
• **Centre National d'Etudes Spatiales (CNES)**
  **75001 Paris (FR)**

(72) Inventeurs:
• **Lagadec, Kristen**
  **12120 Centres (FR)**
• **Roche, Claire**
  **31400 Toulouse (FR)**
• **Sperandei, Jean**
  **31200 Toulouse (FR)**

(74) Mandataire: **Ipside**
  **6, Impasse Michel Labrousse**
  **31100 Toulouse (FR)**

(56) Documents cités:
**EP-B1- 2 552 782    FR-A1- 2 927 312
US-A- 3 270 985    US-A1- 2009 159 753**

EP 2 942 287 B1

## Description

La présente invention appartient au domaine du contrôle d'attitude de véhicules spatiaux. Plus particulièrement, la présente invention concerne le contrôle d'attitude de véhicules spatiaux effectuant une mission d'observation et dont l'attitude est modifiée au cours de phases de préparation, suivies de phases d'observation, au cours desquelles des prises de vues sont effectuées.

Dans le cas notamment de missions d'observation de la Terre à très haute résolution par satellite depuis une orbite basse (dite « orbite LEO »), d'altitude inférieure à quelques milliers de kilomètres, ou depuis une orbite haute (allant jusqu'à l'orbite géostationnaire, dite « orbite GEO »), il est nécessaire d'avoir une stabilité très importante de la ligne de visée des instruments d'observation mis en oeuvre.

Un satellite d'observation est généralement muni d'un système de contrôle d'attitude, comportant un ou des actionneurs inertiels, pour aligner la ligne de visée d'un instrument d'observation du satellite sur une direction souhaitée, et stabiliser l'attitude de cet instrument d'observation pendant la prise de vue.

Dans le cas d'actionneurs inertiels de type roues de réaction, il est connu que la rotation des balourds des roues de réaction crée des vibrations qui se propagent jusqu'à la ligne de visée de l'instrument d'observation et altèrent la qualité des images. Les vibrations sont d'autant plus importantes que les roues de réaction utilisées sont de forte capacité en couple et en moment cinétique, et donc que la masse et la vitesse du rotor sont importantes.

Cela conduit à des exigences contradictoires dans le cas de satellites devant réaliser des manoeuvres de basculement rapides et fréquentes pour multiplier les prises de vue. En effet, pour effectuer des manoeuvres rapides, il faudra utiliser des roues de réaction de forte capacité, qui produiront de fortes vibrations lors des prises de vue.

Afin de limiter les vibrations engendrées par des roues de réaction, il est connu, notamment de la demande internationale WO 2007/077350, de monter ces roues de réaction sur un dispositif isolant qui atténue l'amplitude des vibrations transmises à l'instrument d'observation. Cependant, les vibrations après atténuation demeurent généralement trop importantes pour les besoins de missions d'observation à très haute résolution.

Il est connu également du brevet US 6758444, d'utiliser un nombre de roues de réaction strictement supérieur au nombre d'axes suivant lesquels on cherche à contrôler l'attitude du satellite, ce qui offre au moins un degré de liberté supplémentaire pour le contrôle de l'attitude. Ce degré de liberté supplémentaire est utilisé pour minimiser une fonction de coût représentative du niveau de vibrations engendrées par les roues de réaction. Cette méthode nécessite cependant une connaissance d'un modèle précis des vibrations induites par les roues de réaction. Un tel modèle est difficile à obtenir en pratique avec une précision suffisante, de sorte que les performances seront généralement limitées et insuffisantes pour les besoins de missions d'observation à très haute résolution.

Le document FR 2 927 312, qui est considéré comme le document de l'art antérieur le plus proche, décrit toutes les caractéristiques techniques du préambule de la revendication 1.

La présente invention a pour objectif de fournir un système de contrôle de l'attitude d'un véhicule spatial selon la revendication 11, par exemple un satellite d'observation de la Terre, ainsi qu'un procédé de commande d'un tel système selon la revendication 1, qui permettent à la fois de modifier rapidement l'attitude du véhicule spatial lors des phases de préparation, et de limiter les vibrations lors des phases d'observation.

La présente invention concerne un procédé de commande d'un système de contrôle d'attitude d'un véhicule spatial, le système de contrôle d'attitude comportant un sous-système de manoeuvre comprenant au moins une roue de réaction, et l'attitude du véhicule spatial devant être contrôlée au cours d'au moins une phase de préparation suivie d'une phase d'observation au cours de laquelle une prise de vue doit être effectuée. Selon l'invention, le procédé comporte, au cours de l'au moins une phase de préparation :

- une étape de préparation, au cours de laquelle le sous-système de manoeuvre est commandé pour contrôler l'attitude du véhicule spatial,
- suivie d'une étape de mise à l'arrêt de l'au moins une roue de réaction, au cours de laquelle la vitesse de rotation de l'au moins une roue de réaction est mise à une valeur sensiblement nulle préalablement à ladite phase d'observation.

De préférence, dans un système de contrôle d'attitude comportant un sous-système de contrôle fin, de signature vibratoire inférieure à celle du sous-système de manoeuvre, le sous-système de contrôle fin est commandé, au cours de la phase d'observation, pour contrôler l'attitude du véhicule spatial.

De préférence, l'étape de mise à l'arrêt de l'au moins une roue de réaction comporte une sous-étape de décélération de l'au moins une roue de réaction en boucle fermée ou de freinage de ladite roue en boucle ouverte.

De préférence, dans un sous-système de manoeuvre dont l'au moins une roue de réaction est entraînée en rotation par un moteur électrique polyphasé, la sous-étape de freinage en boucle ouverte consiste à court-circuiter les phases dudit moteur électrique polyphasé. De préférence, la sous-étape de freinage en boucle ouverte est exécutée lorsque la vitesse de rotation de l'au moins une roue est inférieure à un seuil prédéfini.

De préférence, l'étape de préparation comporte une sous-étape de manoeuvre, au cours de laquelle le sous-système de manoeuvre est commandé pour basculer l'attitude du véhicule spatial d'une attitude d'observation à une autre, et une sous-étape au cours de laquelle le sous-système de manoeuvre est commandé pour stabiliser l'attitude du véhicule spatial autour d'une attitude d'observation.

De préférence, l'étape de préparation comporte une sous-étape de dé-saturation du sous-système de manoeuvre, au cours de laquelle on compense en tout ou partie des moments cinétiques induits par des couples perturbateurs externes.

De préférence, la dé-saturation est effectuée en commandant le sous-système de contrôle fin, et/ou en commandant un sous-système de dé-saturation du système de contrôle d'attitude.

Selon l'invention, dans un sous-système de manoeuvre comportant une pluralité de roues de réaction configurées de sorte qu'il existe au moins un vecteur de vitesses de rotation non toutes nulles, dit « noyau du sous-système de manoeuvre », pour lequel la somme des moments cinétiques élémentaires générés par chacune desdites roues de réaction est sensiblement nulle, l'étape de préparation comporte, au début de l'au moins une phase de préparation, une sous-étape d'accélération des roues de réaction autour du noyau du sous-système de manoeuvre. De préférence, l'étape de préparation comporte en outre une sous-étape de décélération des roues de réaction autour du noyau du sous-système de manoeuvre, préalable à l'étape de mise à l'arrêt des roues de réaction.

De préférence, le procédé comporte, au cours de la phase d'observation, une étape de maintien à l'arrêt de l'au moins une roue de réaction, au cours de laquelle la vitesse de rotation de chaque roue de réaction est maintenue à une valeur sensiblement nulle.

La présente invention concerne également un système de contrôle d'attitude d'un véhicule spatial, comportant un sous-système de manoeuvre comprenant au moins une roue de réaction, mis en oeuvre pour contrôler l'attitude du véhicule spatial au cours d'au moins une phase de préparation, laquelle au moins une phase de préparation est suivie d'une phase d'observation au cours de laquelle une prise de vue doit être effectuée. Selon l'invention, le système de contrôle d'attitude comporte des moyens adaptés à effectuer une mise à l'arrêt de l'au moins une roue de réaction préalablement à ladite phase d'observation.

De préférence, le système de contrôle d'attitude comporte un sous-système de contrôle fin, de signature vibratoire inférieure à celle du sous-système de manoeuvre, mis en oeuvre pour contrôler l'attitude du véhicule spatial au cours de la phase d'observation.

De préférence, le système de contrôle d'attitude comporte un sous-système de dé-saturation, adapté à compenser en tout ou partie des moments cinétiques élémentaires induits par des couples perturbateurs externes.

L'invention sera mieux comprise à la lecture de la description suivante, donnée à titre d'exemple nullement limitatif, et faite en se référant aux figures qui représentent :

- Figure 1 : une représentation schématique d'un satellite comportant un système de contrôle d'attitude selon l'invention,
- Figures 2a, 2b, 2c, 2d et 2e : des diagrammes illustrant certaines étapes d'un procédé de commande d'un système de contrôle d'attitude, selon différents modes de mise en oeuvre,
- Figure 3a et 3b : des exemples illustrant, dans le temps, la vitesse de rotation d'une roue de réaction au cours d'une étape de mise à l'arrêt selon l'invention,
- Figure 4 : un exemple illustrant, dans le temps, le contrôle de roues de réaction d'un sous-système de manoeuvre selon l'invention.

L'invention trouve une application particulièrement avantageuse, bien que nullement limitative, dans le cas du contrôle d'attitude d'un satellite effectuant une mission d'observation d'un corps céleste, par exemple une mission d'observation de la Terre.

Un tel satellite d'observation est destiné à être placé sur une orbite Terrestre, par exemple une orbite basse (dite « orbite LEO »), une orbite moyenne (dite « orbite MEO ») ou, de préférence, une orbite haute telle que l'orbite géostationnaire (dite « orbite GEO ») ou une orbite haute elliptique (dite « orbite HEO »).

Pour effectuer sa mission, un satellite d'observation doit être placé dans des attitudes d'observation prédéfinies différentes. Ainsi, le contrôle de l'attitude d'un satellite d'observation s'effectue principalement en deux phases récurrentes :

- une phase, dite « phase de préparation », au cours de laquelle l'attitude du satellite est modifiée pour passer d'une attitude d'observation à une autre,
- une phase, dite « phase d'observation », au cours de laquelle le satellite effectue une prise de vue.

Il est à noter que, pendant la durée d'une phase d'observation, l'attitude du satellite est préférentiellement constante. Rien n'exclut cependant que la consigne d'attitude varie au cours d'une phase d'observation.

Par exemple, dans le cas d'un satellite d'observation sur une orbite basse défilante, la consigne d'attitude peut varier pendant la durée d'une prise de vue afin de tenir compte du mouvement du satellite et maintenir la ligne de visée dirigée sensiblement vers une même zone à la surface de la Terre.

Suivant un autre exemple, dans le cas d'un satellite en orbite GEO, la consigne d'attitude peut varier pendant la durée d'une prise de vue afin de tenir compte de la rotation de la Terre et maintenir la ligne de visée dirigée sensiblement vers une même zone à la surface de la Terre.

L'attitude d'un satellite est contrôlée en formant des couples et des moments cinétiques, pouvant être représentés comme des vecteurs compris dans un espace de contrôle de dimension Nd, Nd étant en pratique égal à un, deux ou trois.

Dans le cas où l'attitude du satellite doit être contrôlée autour d'un axe, l'espace de contrôle est de dimension un. Si l'attitude du satellite doit être contrôlée autour de trois axes d'orientations différentes, l'espace de contrôle est de dimension trois.

Le nombre d'actionneurs mis en oeuvre pour contrôler l'attitude d'un satellite, ainsi que leur agencement, est choisi pour pouvoir former des couples et des moments cinétiques dans l'espace de contrôle choisi. Par exemple, une roue de réaction permet d'obtenir un espace de contrôle de dimension un. Trois roues de réaction, d'axes de rotation dont des vecteurs unitaires sont linéairement indépendants, permettent d'obtenir un espace de contrôle de dimension trois.

Dans la suite de la description, on désigne par « couple élémentaire » et « moment cinétique élémentaire » le couple et le moment cinétique formés par une seule roue de réaction. La somme de couples élémentaires formés par plusieurs roues de réaction sera désignée indifféremment par « couple » ou « couple total ». De même, la somme de moments cinétiques élémentaires formés par plusieurs roues de réaction sera désignée indifféremment par « moment cinétique » ou « moment cinétique total ».

En outre, l'attitude d'un satellite est contrôlée en formant un ou des couples élémentaires dont la norme est comprise dans une plage prédéfinie.

Dans cette plage prédéfinie, les couples élémentaires faibles sont généralement mis en oeuvre pour effectuer un contrôle fin de l'attitude du satellite, tandis que les couples élémentaires forts sont généralement mis en oeuvre pour basculer rapidement le satellite dans une attitude différente.

En pratique, les couples élémentaires généralement mis en oeuvre pour effectuer un contrôle fin de l'attitude d'un satellite sont inférieurs à quelques dizaines de milli-newton mètre, tandis que les couples élémentaires mis en oeuvre pour basculer l'attitude d'un satellite peuvent aller jusqu'à plusieurs centaines de milli-newton mètre ou plus.

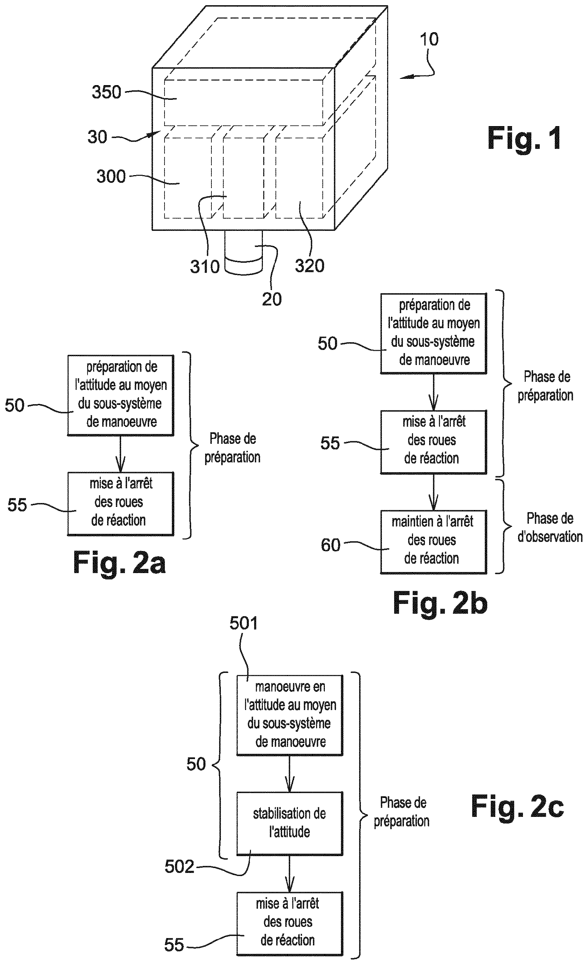

La figure 1 représente, de façon très schématique, un satellite 10 d'observation de la Terre. Le satellite 10 comporte notamment au moins un instrument d'observation 20, de préférence un instrument optique, et un système 30 de contrôle d'attitude.

En pratique, le satellite 10 comporte également d'autres éléments, qui sortent du cadre de l'invention et qui ne sont pas représentés sur les figures.

Le système 30 de contrôle d'attitude comporte un dispositif de commande 350, et au moins un premier sous-système de contrôle, comprenant au moins une roue de réaction, dit « sous-système 300 de manoeuvre », mis en oeuvre au cours des phases de préparation.

Le système 30 de contrôle d'attitude comporte également des moyens adaptés à effectuer une mise à l'arrêt de l'au moins une roue de réaction du sous-système 300 de manoeuvre, préalablement à chacune des phases d'observation.

Par « effectuer une mise à l'arrêt de l'au moins une roue de réaction », on entend mettre la vitesse de rotation de l'au moins une roue à une valeur sensiblement nulle. Par « sensiblement nulle », on entend que la vitesse de rotation est faible, inférieure à quelques tours par minute, voire quelques dixièmes de tours par minute ; de préférence ladite vitesse de rotation est nulle.

A des fins de description d'exemples de mise en oeuvre des moyens d'arrêter la rotation de l'au moins une roue de réaction, on se place de manière non limitative dans le cas où ladite roue de réaction est entraînée par un moteur électrique comportant une pluralité de bobinages, dits « phases ».

Le dispositif de commande 350 comporte par exemple une électronique de commande comprenant, de manière connue de l'homme de l'art, une pluralité d'interrupteurs adaptés à activer / désactiver chacune des phases dudit moteur, ainsi qu'un module de contrôle pilotant la fermeture et l'ouverture desdits interrupteurs de l'électronique de commande et pilotant l'intensité du courant circulant dans la ou les phases activées.

Le module de contrôle comporte par exemple un micro-ordinateur relié à des moyens de mémorisation (disque dur magnétique, mémoire RAM et/ou ROM, disque optique, etc.) par un bus de communication. Un produit programme d'ordinateur est mémorisé dans les moyens de mémorisation, sous la forme d'un ensemble d'instructions de code de programme qui, lorsqu'elles sont exécutées par le micro-ordinateur, permettent la mise en oeuvre du procédé de commande, qui sera décrit en détail ci-après. Suivant certains modes de réalisation, le module de contrôle comporte également des circuits électroniques spécialisés, de type ASIC, FPGA, etc.

Suivant un premier exemple, la rotation de l'au moins une roue de réaction du sous-système 300 de manoeuvre est arrêtée en boucle fermée.

Par « en boucle fermée », on entend au moyen d'une boucle d'asservissement de la vitesse de rotation de l'au moins une roue de réaction, c'est-à-dire que le module de contrôle envoie des ordres de commande déterminés, en fonction de la vitesse mesurée, pour faire tendre la vitesse mesurée vers une consigne de vitesse nulle.

Toutefois, les performances peuvent être limitées en pratique par la précision des mesures de vitesse. En effet, la vitesse ne sera asservie sur la consigne de vitesse nulle qu'aux erreurs de mesure près, de sorte que des vibrations pourront subsister. En pratique, les capteurs de vitesse, par exemple des tachymètres, doivent avoir une précision suffisante pour que les vibrations, induites par une vitesse réelle non nulle de rotation, soient négligeables par rapport aux vibrations maximales tolérées.

Suivant un autre exemple, la rotation de l'au moins une roue de réaction du sous-système 300 de manoeuvre est arrêtée en boucle ouverte.

Par « en boucle ouverte », on entend que les ordres de commande ont pour effet de freiner l'au moins une roue de réaction, sans tenir compte de la vitesse mesurée.

Par exemple, le module de contrôle peut, lorsque la rotation de l'au moins une roue de réaction doit être arrêtée, activer simultanément chacune des phases du moteur, c'est-à-dire court-circuiter simultanément chacune des phases du moteur. Les forces contre-électromotrices liées aux phénomènes d'induction agissent alors comme un frottement visqueux et le frottement sec maintient l'immobilité totale de l'au moins une roue de réaction.

Cette solution présente l'avantage de ne pas nécessiter une électronique de commande complexe. En particulier, elle ne nécessite pas de capteurs de vitesse précis comme dans le cas d'une décélération de l'au moins une roue de réaction en boucle fermée. Rien n'exclut toutefois de munir le dispositif de commande 350 d'une électronique de commande spécifique pour l'activation simultanée de chacune des phases du moteur.

Le système 30 de contrôle d'attitude est adapté à contrôler l'attitude du satellite 10 dans un espace de contrôle de dimension au moins un.

De préférence, le système 30 de contrôle d'attitude est conçu pour contrôler l'attitude du satellite 10 dans un espace de contrôle de dimension trois. On se place, dans la suite de la description, dans le cas non limitatif d'un espace de contrôle de dimension trois.

Dans ce cas, le sous-système 300 de manoeuvre comporte au moins trois roues de réaction, agencées de sorte que les vecteurs unitaires des axes de rotation de trois roues de réaction sont linéairement indépendants.

Le procédé de commande du système 30 de contrôle d'attitude du satellite 10 est mis en oeuvre par le dispositif de commande 350.

La figure 2a représente les étapes principales du procédé de commande au cours des phases de préparation. Ces étapes sont notamment :

- une étape 50 de préparation, au cours de laquelle le sous-système 300 de manoeuvre, en particulier la vitesse de rotation des roues de réaction, est commandé pour contrôler l'attitude du satellite 10,
- une étape 55 de mise à l'arrêt des roues de réaction, préalable à chaque phase d'observation, au cours de laquelle la vitesse de rotation des roues de réaction est mise à une valeur sensiblement nulle.

Au cours de l'étape 50 de préparation, le dispositif de commande 350 envoie un ou des ordres de commande au sous-système 300 de manoeuvre qui ont pour effet notamment de basculer le satellite 10 d'une attitude d'observation à une autre.

Au cours de l'étape 55 de mise à l'arrêt des roues de réaction, le dispositif de commande 350 envoie un ou des ordres de commande au sous-système 300 de manoeuvre qui ont pour effet de mettre la vitesse de rotation des roues de réaction à une valeur sensiblement nulle, préalablement à une phase d'observation et après l'étape 50 de préparation.

Il est à noter que rien n'exclut de poursuivre le contrôle d'attitude au cours de l'étape 55 de mise à l'arrêt des roues de réaction, en particulier au début de cette étape, lorsque la vitesse de rotation des roues de réaction est relativement importante et qu'une mise à l'arrêt trop brutale risquerait de faire diverger l'attitude du satellite 10 de l'attitude d'observation ciblée.

Rien n'exclut par conséquent d'envoyer des ordres de commande déterminés à la fois pour mettre à l'arrêt les roues de réaction (en fonction d'une consigne de vitesse) et pour contrôler l'attitude du satellite 10 (en fonction d'une consigne d'attitude).

On comprend que, du fait de la mise à l'arrêt préalable de chaque roue de réaction du sous-système 300 de manoeuvre, ledit sous-système de manoeuvre générera peu ou pas de vibrations pendant les prises de vues.

Suivant un premier exemple, l'étape 55 de mise à l'arrêt des roues de réaction comporte une sous-étape 550 au cours de laquelle on commande une décélération des roues de réaction en boucle fermée.

Suivant un autre exemple, l'étape 55 de mise à l'arrêt des roues de réaction comporte une sous-étape 551 au cours de laquelle on commande un freinage des roues de réaction en boucle ouverte. Par exemple, dans le cas où les roues de réaction sont entraînées par des moteurs électriques polyphasés, on court-circuite les phases de chacun des moteurs électriques.

Dans un mode préféré de mise en oeuvre, l'étape 55 de mise à l'arrêt des roues de réaction comporte une sous-étape 550 de décélération des roues de réaction en boucle fermée, suivie d'une sous-étape 551 de freinage des roues de réaction en boucle ouverte.

De préférence, la sous-étape 551 de freinage est exécutée lorsque la vitesse mesurée de rotation d'au moins une roue de réaction (ou de chacune des roues de réaction), est inférieure à un seuil prédéfini, par exemple de l'ordre de quelques tours par minute.

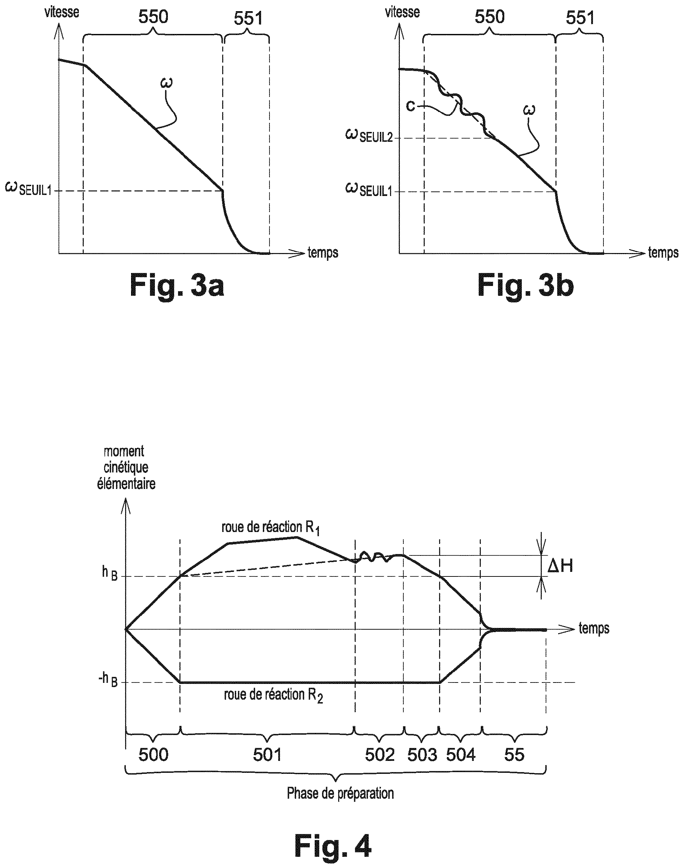

Cet exemple est illustré par la figure 3a, qui représente l'évolution temporelle de la vitesse w de rotation d'une roue de réaction au cours de l'étape 55 de mise à l'arrêt. Au cours de la sous-étape 550 de décélération en boucle fermée, la vitesse w de rotation diminue progressivement jusqu'à une valeur seuil $\omega_{SEUIL1}$. Lorsque la valeur seuil $\omega_{SEUIL1}$ est atteinte, la sous-étape 551 de freinage en boucle ouverte est exécutée.

Le mode illustré par la figure 3a est avantageux dans la mesure où il permet d'éviter qu'un freinage des roues de réaction, en particulier s'il est effectué en court-circuitant les phases des moteurs électriques, soit déclenché avec une vitesse initiale trop importante, ce qui risquerait d'entraîner une détérioration des moteurs électriques.

La figure 3b illustre un mode préféré de mise en oeuvre de l'étape 55 de mise à l'arrêt des roues de réaction, dans lequel l'attitude du satellite 10 continue d'être contrôlée au début de l'étape 55 de mise à l'arrêt des roues de réaction.

Dans ce mode, l'étape 55 comprend, comme dans l'exemple illustré par la figure 3a, une sous-étape 550 de décélération des roues de réaction en boucle fermée, suivie d'une sous-étape 551 de freinage des roues de réaction en boucle ouverte exécutée lorsque la vitesse de rotation est inférieure à la valeur seuil $\omega_{SEUIL1}$.

Au début de la sous-étape 550 de décélération en boucle fermée, le sous-système 300 de manoeuvre est commandé à la fois pour décélérer les roues de réaction et pour contrôler l'attitude du satellite 10. La vitesse qui serait obtenue pour des ordres de commande déterminés d'après la consigne de décélération en boucle fermée est représentée par un trait discontinu désigné par la référence « c ». A cette vitesse se superpose la vitesse obtenue pour des ordres de commande déterminés d'après la consigne d'attitude, de sorte que la vitesse $\omega$ oscille sensiblement autour du trait discontinu c.

Ensuite, lorsque la vitesse w de rotation a atteint une valeur seuil $\omega_{SEUIL2}$ (supérieure à la valeur seuil $\omega_{SEUIL1}$, par exemple de l'ordre de quelques centaines ou quelques dizaines de tours par minute), le sous-système 300 de manoeuvre est commandé uniquement pour décélérer les roues de réaction en boucle fermée, en fonction de la consigne de vitesse.

Rien n'exclut, en outre, que l'attitude du satellite 10 continue d'être contrôlée jusqu'au début de la sous-étape 551 de freinage en boucle ouverte, ce qui revient à considérer des seuils $\omega_{SEUIL1}$ et $\omega_{SEUIL2}$ de valeurs égales, par exemple de l'ordre de quelques tours par minute.

La figure 2b représente un mode particulier de mise en oeuvre, dans lequel, au cours des phases d'observation, le procédé comporte une étape 60 de maintien de l'arrêt des roues de réaction.

Au cours de l'étape 60 de maintien de l'arrêt des roues, le dispositif de commande 350 envoie un ou des ordres de commande au sous-système 300 de manoeuvre qui ont pour effet de maintenir la vitesse de rotation des roues de réaction à une valeur sensiblement nulle.

En effet, il peut s'avérer avantageux de maintenir, au cours des phases d'observation, l'arrêt des roues de réaction, afin d'éviter que celles-ci ne redémarrent, par exemple sous l'effet de couples gyroscopiques parasites, et n'atteignent une vitesse de rotation susceptible de générer des vibrations dont l'amplitude perturberait les prises de vues.

Au cours des phases d'observation, l'attitude du satellite 10 peut n'être pas contrôlée, si l'on peut considérer les dérives en attitude comme étant négligeables lors des phases d'observation.

Dans un mode préféré de réalisation, le système 30 de contrôle d'attitude comporte un second sous-système de contrôle, dit « sous-système 310 de contrôle fin », mis en oeuvre au cours des phases d'observation.

Le sous-système 310 de contrôle fin est conçu de sorte que sa signature vibratoire, c'est-à-dire l'amplitude des vibrations qu'il engendre lorsqu'il est mis en oeuvre, est inférieure à celle du sous-système 300 de manoeuvre, et inférieure à l'amplitude maximale tolérée pour les prises de vue.

Plus particulièrement, l'amplitude des vibrations que le sous-système 310 de contrôle fin engendre est inférieure à celle du sous-système 300 de manoeuvre pour les valeurs de couples élémentaires nécessaires pour effectuer le contrôle fin de l'attitude lors des prises de vues.

Le sous-système 310 de contrôle fin comporte au moins un actionneur pouvant être de tout type adapté, c'est-à-dire permettant d'obtenir une signature vibratoire faible. Il s'agit par exemple d'une micro-roue, d'un actionneur à jet couplé à un système de propulsion chimique ou électrique, d'un actionneur magnétique, d'un volet orientable modulant la pression solaire en créant un couple, etc. Dans le cas où le sous-système 310 de contrôle fin comporte plusieurs actionneurs, ceux-ci peuvent être constitués par une combinaison d'actionneurs parmi les actionneurs susmentionnés, du même type ou de types différents.

Le cas échéant, le procédé comporte, au cours des phases d'observation, une étape de contrôle fin de l'attitude du satellite 10 au moyen du sous-système 310 de contrôle fin, non représentée sur les figures.

Il est à noter que rien n'exclut d'utiliser également le sous-système 310 de contrôle fin en dehors des phases d'observation, en particulier au cours de l'étape 55 de mise à l'arrêt des roues de réaction, pour assurer la transition du contrôle d'attitude du sous-système 300 de manoeuvre vers le sous-système 310 de contrôle fin.

On comprend que la mise en oeuvre d'un sous-système 310 de contrôle fin, de signature vibratoire faible, permet de limiter l'amplitude des vibrations induites par le contrôle d'attitude lors des prises de vues.

En outre, les exigences contradictoires, de couples élémentaires forts pour effectuer les basculements d'attitude d'une part, et de signature vibratoire faible pour effectuer les prises de vues d'autre part, pèsent sur des sous-systèmes différents. Les sous-systèmes 300 de manoeuvre et 310 de contrôle fin peuvent donc être optimisés par conception pour respectivement les phases de préparation et les phases d'observation.

Dans ce cas, le sous-système 300 de manoeuvre est conçu principalement pour disposer d'une capacité maximale importante en couple et en moment cinétique, afin de pouvoir basculer rapidement le satellite 10, et avantageusement réduire la durée des phases de préparation. Par exemple, la capacité maximale du sous-système 300 de manoeuvre est de l'ordre de 10 newton mètre (N·m) et 15 newton mètre seconde (N·m·s) ou plus.

Le sous-système 310 de contrôle fin peut disposer d'une capacité maximale nettement inférieure à celle du sous-système 300 de manoeuvre. Par exemple, la capacité maximale du sous-système 310 de contrôle fin est de l'ordre de 0.1 N·m et 1 N·m·s. La conception du sous-système 310 de contrôle fin peut donc se focaliser principalement sur la réduction des vibrations induites sur l'instrument d'observation 20 du satellite 10.

La figure 2c représente un mode particulier de mise en oeuvre du procédé, dans lequel l'étape 50 de préparation comporte une sous-étape 501 de manoeuvre, au cours de laquelle le sous-système 300 de manoeuvre est commandé pour basculer le satellite 10 d'une attitude d'observation à une autre, suivie d'une sous-étape 502 au cours de laquelle le sous-système 300 de manoeuvre est commandé pour stabiliser l'attitude du satellite 10 autour de l'attitude d'observation ciblée.

Dans un mode préféré de réalisation du système 30 de contrôle d'attitude, le nombre de roues de réaction est supérieur à la dimension Nd de l'espace de contrôle, et leur agencement est tel qu'il existe au moins Nd roues de réaction pour lesquelles les vecteurs unitaires des axes de rotation sont linéairement indépendants.

Dans le cas d'un espace de contrôle de dimension trois, le sous-système 300 de manoeuvre comporte au moins quatre roues de réaction dont trois vecteurs unitaires sont linéairement indépendants.

Avec une telle configuration, on comprend qu'il existe nécessairement un vecteur de vitesses non toutes nulles de rotation des roues de réaction, pour lequel la somme des moments cinétiques élémentaires, induits par la rotation de chacune des roues de réaction, est sensiblement nulle.

Ce vecteur de vitesses non toutes nulles détermine un noyau du sous-système 300 de manoeuvre, dans lequel le moment cinétique total formé est sensiblement nul tandis que des roues de réaction sont en rotation. Le noyau du sous-système 300 de manoeuvre est de dimension au moins un, mais peut être de dimension supérieure si le nombre de roues de réaction est égal ou supérieur à cinq.

On désigne par $\vec{u}_n$ le vecteur unitaire de l'axe de rotation de la n-ième roue de réaction, et par :

$$\vec{H}_n = H_n \vec{u}_n$$

le moment cinétique élémentaire de la n-ième roue de réaction.

Dans le cas où le sous-système 300 de manoeuvre comporte quatre roues de réaction, toute demande de moment cinétique total pourra être répartie sur lesdites quatre roues de réaction avec un degré de liberté.

En effet, il existe un vecteur non nul $(h_1, h_2, h_3, h_4)$ tel que :

$$\sum_{n=1}^{4} h_n \vec{u}_n = \vec{0}$$

de sorte que, pour toute valeur d'un scalaire À :

$$\vec{H} = \sum_{n=1}^{4} H_n \vec{u}_n = \sum_{n=1}^{4} (H_n + \lambda h_n) \cdot \vec{u}_n$$

Le vecteur des vitesses de rotation des roues de réaction qui engendrent le vecteur $(h_1, h_2, h_3, h_4)$ correspond au noyau du sous-système 300 de manoeuvre.

De préférence, les roues de réaction sont agencées suivant une géométrie non singulière, c'est-à-dire de sorte que les vecteurs unitaires d'un groupe quelconque de Nd roues de réaction sont linéairement indépendants. De la sorte, on assure que le noyau du sous-système 300 de manoeuvre est engendré par un vecteur de vitesses toutes non nulles, de sorte que les coefficients $h_n$ sont tous non nuls.

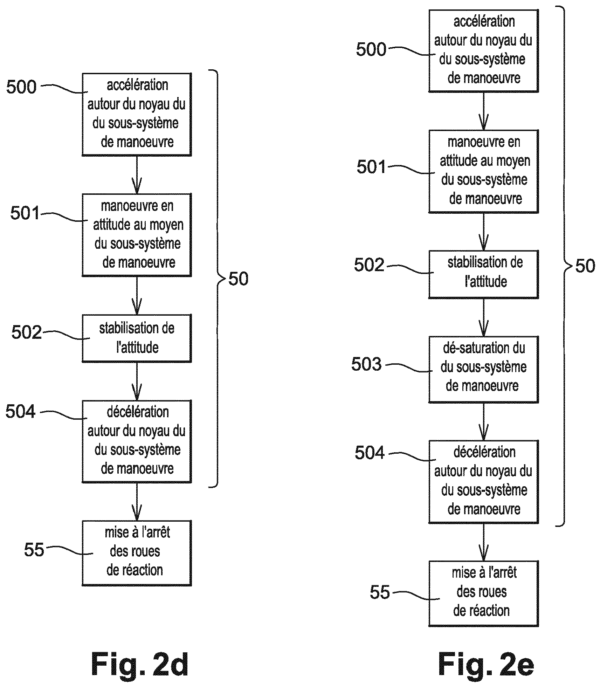

La figure 2d représente un mode préféré de mise en oeuvre, dans lequel l'étape 50 de préparation comporte, au début des phases de préparation, une sous-étape 500 au cours de laquelle on commande une accélération des roues de réaction autour du noyau du sous-système 300 de manoeuvre.

Par « autour du noyau », on entend, d'une part, que la précision de l'accélération dans le noyau dépend de la précision des mesures de vitesse et, d'autre part, que rien n'exclut d'envoyer des ordres de commande déterminés à la fois pour accélérer les roues de réaction dans le noyau (en fonction d'une consigne de vitesse) et pour contrôler l'attitude du satellite 10 (en fonction d'une consigne d'attitude).

Au cours de la sous-étape 500 d'accélération des roues de réaction autour du noyau du sous-système 300 de manoeuvre, on augmente progressivement la vitesse de rotation des roues de réaction jusqu'à obtenir des moments cinétiques élémentaires prédéfinis non nuls, dits « biais élémentaires », sur chacune des roues de réaction.

De préférence, les biais élémentaires sont choisis de sorte que les excursions en moment cinétique élémentaire pour les manoeuvres prévues ne conduisent pas, en valeur absolue, le moment cinétique élémentaire en deçà d'un seuil prédéfini. C'est-à-dire que lesdites excursions n'impliquent pas de passer par une vitesse de rotation nulle. De préférence, les biais élémentaires sont également choisis de sorte que les excursions en moment cinétique élémentaire, pour les manoeuvres prévues, n'impliquent pas de dépasser une vitesse de rotation maximale autorisée.

A l'issue de l'étape 50 de préparation, chacune des roues de réaction se retrouvera à nouveau avec un moment cinétique élémentaire proche du biais élémentaire. De la sorte, la sous-étape 502 de stabilisation, lorsqu'elle est exécutée, est effectuée avec des vitesses de rotation des roues de réaction suffisamment éloignées de la vitesse nulle.

Ceci est avantageux dans la mesure où, avec les technologies actuelles, il s'avère complexe d'effectuer la stabilisation des roues de réaction avec des vitesses de rotation proches de zéro. D'une part, la précision de la stabilisation dépend fortement de la précision des mesures de vitesse, et donc des performances des capteurs de vitesse. D'autre part, les roues de réaction se présentent généralement sous la forme d'un rotor monté sur un roulement à billes : à vitesse de rotation proche de zéro, le film de lubrification fluide du roulement à billes peut s'interrompre, et la fluctuation de la vitesse de rotation autour de zéro va générer des frottements secs et un échauffement local pouvant entraîner des microsoudures des roulements à billes.

On comprend que, en assurant que la sous-étape 502 de stabilisation soit exécutée avec des vitesses de rotation suffisamment éloignées de vitesses nulles, les problèmes susmentionnés sont résolus.

De préférence, l'étape 50 de préparation comporte également une sous-étape 504, préalable à l'étape 55 de mise à l'arrêt des roues de réaction, au cours de laquelle on commande une décélération des roues de réaction autour du noyau du sous-système 300 de manoeuvre.

Comme pour la sous-étape 500 d'accélération, par « autour du noyau » on entend, d'une part, que la précision de la décélération dans le noyau dépend de la précision des mesures de vitesse et, d'autre part, que rien n'exclut d'envoyer des ordres de commande déterminés à la fois pour décélérer les roues de réaction dans le noyau (en fonction d'une consigne de vitesse) et pour contrôler l'attitude du satellite 10 (en fonction d'une consigne d'attitude).

Cette sous-étape 500, visible sur la figure 2d, permet de réduire la vitesse de rotation des roues de réaction avec un moment cinétique total faible modifiant peu l'attitude du satellite 10 obtenue à l'issue de la sous-étape 502 de stabilisation.

Dans un autre mode préféré de réalisation du système 30 de contrôle d'attitude, compatible avec l'un quelconque des modes précédents, il comporte également un sous-système 320 de dé-saturation, visible sur la figure 1.

Le sous-système 320 de dé-saturation comporte des actionneurs adaptés à engendrer des couples sur le satellite 10, et diminuer le moment cinétique des roues de réaction du sous-système 300 de manoeuvre lorsque cela est nécessaire. En effet, lorsque lesdites roues de réaction sont utilisées pour contrôler l'attitude du satellite 10, l'effet cumulatif de certains couples perturbateurs externes agissant sur le satellite 10 (comme ceux induits par la traînée atmosphérique résiduelle, la pression de radiation solaire ou tout autre phénomène physique externe agissant sur le satellite 10) va entraîner une augmentation du moment cinétique élémentaire d'au moins une des roues de réaction. Pour limiter cette excursion en moment cinétique élémentaire, il faut utiliser des actionneurs qui ne sont pas des actionneurs inertiels.

Dans un mode préféré de mise en oeuvre, l'étape 50 de préparation comporte une sous-étape 503 au cours de laquelle on commande une dé-saturation du sous-système 300 de manoeuvre.

Ce mode de mise en oeuvre est représenté sur la figure 2e dans le cas où il combiné avec le mode décrit en référence à la figure 2d.

Dans l'exemple illustré par la figure 2e, la sous-étape 503 de dé-saturation est exécutée après la sous-étape 502 de stabilisation et avant la sous-étape 504 de décélération autour du noyau.

Il est à noter que la sous-étape 503 de dé-saturation est exécutée, suivant d'autres exemples, simultanément à d'autres sous-étapes. En particulier, s'il existe un modèle permettant de prédire les couples perturbateurs externes, leurs effets peuvent être compensés au fur et à mesure, simultanément à une ou plusieurs sous-étapes de l'étape 50 de préparation.

Rien n'exclut, en outre, de réaliser tout ou partie de la dé-saturation au cours de l'étape 55 de mise à l'arrêt des roues de réaction et/ou au cours de la phase d'observation.

De manière générale, l'exécution de la sous-étape 503 de dé-saturation simultanément à d'autres sous-étapes de l'étape 50 de préparation contribue à réduire la durée des phases de préparation et augmenter la durée des phases d'observation.

La dé-saturation du sous-système 300 de manoeuvre s'effectue, le cas échéant, au moyen du sous-système 320 de dé-saturation.

Alternativement ou en combinaison avec la mise en oeuvre d'un sous-système 320 de dé-saturation, la dé-saturation du sous-système 300 de manoeuvre s'effectue au moyen du sous-système 310 de stabilisation, lorsque celui-ci comporte des actionneurs de stabilisation autres qu'inertiels (par exemple des actionneurs à jet couplés à un système de propulsion chimique ou électrique, des actionneurs magnétiques, etc.).

La figure 4 représente schématiquement les moments cinétiques élémentaires de deux roues de réaction du sous-système 300 de manoeuvre. A des fins de clarté des figures, on considère sur la figure 4 deux roues de réaction $R_1$ et $R_2$ qui ont sensiblement le même axe de rotation.

Au cours de la sous-étape 500 d'accélération autour du noyau du sous-système 300 de manoeuvre, les moments cinétiques élémentaires des roues de réaction $R_1$ et $R_2$ augmentent tous deux en valeur absolue, en sens opposé, jusqu'à atteindre des biais élémentaires désignés respectivement par $h_B$ et ($-h_B$).

Au cours de la sous-étape 501 de manoeuvre, le moment cinétique élémentaire de la roue de réaction $R_1$ est contrôlé pour basculer le satellite 10.

Au cours de la sous-étape 502 de stabilisation, le moment cinétique élémentaire de la roue de réaction $R_1$ est contrôlé, théoriquement autour du biais élémentaire $h_B$, pour stabiliser l'attitude du satellite 10.

On voit que, du fait des couples externes perturbateurs, le moment cinétique élémentaire oscille autour d'une valeur moyenne supérieure au biais élémentaire $h_B$. Le moment cinétique élémentaire induit par lesdits couples externes perturbateurs, à l'issue de la sous-étape 502 de stabilisation, est désigné par $\Delta H$.

Au cours de la sous-étape 503 de dé-saturation, le biais $\Delta H$ induit par les couples externes perturbateurs est compensé, et le moment cinétique de la roue de réaction $R_1$ tend progressivement vers le biais élémentaire $h_B$.

Au cours de la sous-étape 504 de décélération autour du noyau du sous-système 300 de manoeuvre, les moments cinétiques élémentaires des roues de réaction $R_1$ et $R_2$ diminuent ensemble en valeur absolue.

L'étape 55 de mise à l'arrêt des roues de réaction $R_1$ et $R_2$ est par exemple exécutée lorsque la vitesse de rotation d'au moins une roue de réaction devient inférieure à un seuil prédéfini, par exemple de l'ordre de la dizaine de tours par minute.

Dans l'exemple illustré par la figure 4, les sous-étapes de l'étape 50 de préparation sont exécutées séquentiellement.

Tel qu'on la vu, rien n'exclut, suivant d'autres exemples, que certaines de ces sous-étapes soient exécutées simultanément. Suivant des exemples non limitatifs, pouvant être combinés entre eux :

- l'exécution de la sous-étape 501 de manoeuvre débute avant la fin de la sous-étape 500 d'accélération autour du noyau,
- l'exécution de la sous-étape 502 de stabilisation se poursuit au cours de la sous-étape 503 de dé-saturation et/ou de la sous-étape 504 de décélération autour du noyau,
- la sous-étape 503 de dé-saturation est exécutée en continu pendant les phases de préparation, etc.

**Revendications**

1. Procédé de commande d'un système (30) de contrôle d'attitude d'un véhicule spatial (10), le système (30) de contrôle d'attitude comportant un sous-système (300) de manoeuvre comprenant une pluralité de roues de réaction, l'attitude du véhicule spatial (10) devant être contrôlée au cours d'au moins une phase de préparation suivie d'une phase d'observation au cours de laquelle une prise de vue doit être effectuée, ledit procédé comportant, au cours de ladite au moins une phase de préparation :

   - une étape (50) de préparation, au cours de laquelle le sous-système (300) de manoeuvre est commandé pour contrôler l'attitude du véhicule spatial (10),
   - suivie d'une étape (55) de mise à l'arrêt des roues de réaction, au cours de laquelle la vitesse de rotation de chaque roue de réaction est mise à une valeur sensiblement nulle préalablement à ladite phase d'observation,

   **caractérisé en ce que**, les roues de réaction du sous-système (300) de manoeuvre étant configurées de sorte qu'il existe au moins un vecteur de vitesses de rotation non toutes nulles, dit « noyau du sous-système (300) de manoeuvre », pour lequel la somme des moments cinétiques élémentaires générés par chacune desdites roues de réaction est sensiblement nulle, l'étape (50) de préparation comporte, au début de l'au moins une phase de préparation, une sous-étape (500) d'accélération des roues de réaction autour du noyau du sous-système (300) de manoeuvre.

2. Procédé selon la revendication 1, **caractérisé en ce que** l'étape (50) de préparation comporte une sous-étape (504) de décélération des roues de réaction autour du noyau du sous-système (300) de manoeuvre, préalable à l'étape (55) de mise à l'arrêt des roues de réaction.

3. Procédé selon l'une des revendications précédentes, **caractérisé en ce que** l'étape (55) de mise à l'arrêt des roues de réaction comporte une sous-étape (550) de décélération des roues de réaction en boucle fermée.

4. Procédé selon l'une des revendications précédentes, **caractérisé en ce que** l'étape (55) de mise à l'arrêt des roues de réaction comporte une sous-étape (551) de freinage des roues de réaction en boucle ouverte.

5. Procédé selon la revendication 4, **caractérisé en ce que**, dans un sous-système (300) de manoeuvre dont les roues de réaction sont entrainées en rotation par des moteurs électriques polyphasés, la sous-étape (551) de freinage en boucle ouverte consiste à court-circuiter les phases de chacun desdits moteurs électriques polyphasés.

6. Procédé selon l'une des revendications 4 à 5, **caractérisé en ce que** la sous-étape (551) de freinage en boucle ouverte est exécutée lorsque la vitesse de rotation d'au moins une roue est inférieure à un seuil prédéfini.

7. Procédé selon l'une des revendications précédentes, **caractérisé en ce que** l'étape (50) de préparation comporte une sous-étape (501) de manoeuvre, au cours de laquelle le sous-système (300) de manoeuvre est commandé pour basculer l'attitude du véhicule spatial d'une attitude d'observation à une autre, et une sous-étape (502) au cours de laquelle le sous-système (300) de manoeuvre est commandé pour stabiliser l'attitude du véhicule spatial (10) autour de l'attitude d'observation ciblée.

8. Procédé selon l'une des revendications précédentes, **caractérisé en ce que** l'étape (50) de préparation comporte une sous-étape (503) de dé-saturation du sous-système (300) de manoeuvre, au cours de laquelle on compense en tout ou partie des moments cinétiques induits par des couples perturbateurs externes.

9. Procédé selon l'une des revendications précédentes, **caractérisé en ce qu'**il comporte, au cours de la phase d'observation, une étape (60) de maintien à l'arrêt des roues de réaction, au cours de laquelle la vitesse de rotation de chaque roue de réaction est maintenue à une valeur sensiblement nulle.

10. Produit programme d'ordinateur, **caractérisé en ce qu'**il comporte un ensemble d'instructions de code de programme qui, lorsqu'elles sont exécutées par un processeur, mettent en oeuvre un procédé de commande selon l'une des revendications précédentes

11. Système (30) de contrôle d'attitude d'un véhicule spatial (10), comportant un sous-système (300) de manoeuvre comprenant une pluralité de roues de réaction, ledit sous-système (300) de manoeuvre étant mis en oeuvre pour contrôler l'attitude du véhicule spatial (10) au cours d'au moins une phase de préparation, laquelle au moins une phase de préparation est suivie d'une phase d'observation au cours de laquelle une prise de vue doit être effectuée, ledit système (30) comportant un dispositif de commande (350) du sous-système (300) de manoeuvre configuré pour effectuer une mise à l'arrêt des roues de réaction préalablement à ladite phase d'observation, **caractérisé en ce que** les roues de réaction du sous-système (300) de manoeuvre sont configurées de sorte qu'il existe au moins un vecteur de vitesses de rotation non toutes nulles, dit « noyau du sous-système (300) de manoeuvre », pour lequel la somme des moments cinétiques élémentaires générés par chacune desdites roues de réaction est sensiblement nulle, et **en ce que** ledit dispositif de commande (350) est configuré pour commander, au début de l'au moins une phase de préparation, une accélération des roues de réaction autour du noyau du sous-système (300) de manoeuvre.

**Patentansprüche**

1. Verfahren zur Steuerung eines Lageregelungssystems (30) eines Raumfahrzeugs (10), wobei das Lageregelungssystem (30) ein Betätigungsuntersystem (300) beinhaltet, das eine Vielzahl von Reaktionsrädern umfasst, wobei die Lage des Raumfahrzeugs (10) im Laufe mindestens einer Vorbereitungsphase, gefolgt von einer Beobachtungsphase geregelt werden muss, im Laufe derer eine Aufnahme durchgeführt werden muss, wobei das Verfahren im Laufe der mindestens einen Vorbereitungsphase beinhaltet:

- einen Vorbereitungsschritt (50), im Laufe dessen das Betätigungsuntersystem (300) gesteuert wird, um die Lage des Raumfahrzeugs (10) zu regeln,
- gefolgt von einem Schritt (55) des Anhaltens der Reaktionsräder, im Laufe dessen die Rotationsgeschwindigkeit von jedem Reaktionsrad vor der Beobachtungsphase auf einen Wert von im Wesentlichen Null gesetzt wird,

**dadurch gekennzeichnet, dass** die Reaktionsräder des Betätigungsuntersystems (300) derart konfiguriert sind, dass mindestens ein Vektor von Rotationsgeschwindigkeiten vorhanden ist, die nicht alle Null sind, "Kern des Betätigungsuntersystems (300)" genannt, bei denen die Summe der elementaren Dralle, die von jedem der Reaktionsräder generiert werden, im Wesentlichen Null ist, wobei der Vorbereitungsschritt (50) zu Beginn der mindestens einen Vorbereitungsphase einen Beschleunigungsunterschritt (500) der Reaktionsräder um den Kern des Betätigungsuntersystems (300) beinhaltet.

2. Verfahren nach Anspruch 1, **dadurch gekennzeichnet, dass** der Vorbereitungsschritt (50) vor dem Schritt (55) des Anhaltens der Reaktionsräder einen Verzögerungsunterschritt (504) der Reaktionsräder um den Kern des Betätigungsuntersystems (300) beinhaltet.

3. Verfahren nach einem der vorstehenden Ansprüche, **dadurch gekennzeichnet, dass** der Schritt (55) des Anhaltens der Reaktionsräder einen Verzögerungsunterschritt (550) der Reaktionsräder in einem geschlossenen Kreislauf beinhaltet.

4. Verfahren nach einem der vorstehenden Ansprüche, **dadurch gekennzeichnet, dass** der Schritt (55) des Anhaltens der Reaktionsräder einen Bremsunterschritt (551) der Reaktionsräder in einem offenen Kreislauf beinhaltet.

5. Verfahren nach Anspruch 4, **dadurch gekennzeichnet, dass** der Bremsunterschritt (551) in einem offenen Kreislauf in einem Betätigungsuntersystem (300), dessen Reaktionsräder durch mehrphasige Elektromotoren in Rotation versetzt werden, darin besteht, die Phasen jedes der mehrphasigen Elektromotoren kurzzuschließen.

**6.** Verfahren nach einem der Ansprüche 4 bis 5, **dadurch gekennzeichnet, dass** der Bremsunterschritt (551) in einem offenen Kreislauf ausgeführt wird, wenn die Rotationsgeschwindigkeit mindestens eines Rades geringer als ein zuvor definierter Schwellenwert ist.

**7.** Verfahren nach einem der vorstehenden Ansprüche, **dadurch gekennzeichnet, dass** der Vorbereitungsschritt (50) einen Betätigungsunterschritt (501) beinhaltet, im Laufe dessen das Betätigungsuntersystem (300) gesteuert wird, um die Lage des Raumfahrzeugs von einer Beobachtungslage in eine andere zu schwenken, und einen Unterschritt (502), im Laufe dessen das Betätigungsuntersystem (300) gesteuert wird, um die Lage des Raumfahrzeugs (10) um die gezielte Beobachtungslage zu stabilisieren.

**8.** Verfahren nach einem der vorstehenden Ansprüche, **dadurch gekennzeichnet, dass** der Vorbereitungsschritt (50) einen Unterschritt (503) zur Entsättigung des Betätigungsuntersystems (300) beinhaltet, im Laufe dessen man Dralle, die durch externe Störmomente induziert werden, vollständig oder teilweise kompensiert.

**9.** Verfahren nach einem der vorstehenden Ansprüche, **dadurch gekennzeichnet, dass** es im Laufe der Beobachtungsphase einen Schritt (60) zum Halten der Reaktionsräder im Anhalte-Zustand beinhaltet, im Laufe dessen die Rotationsgeschwindigkeit jedes Reaktionsrades auf einem Wert von im Wesentlichen Null gehalten wird.

**10.** Computerprogrammprodukt, **dadurch gekennzeichnet, dass** es eine Einheit von Programmcodebefehlen beinhaltet, die, wenn sie von einem Prozessor ausgeführt werden, ein Verfahren zur Steuerung nach einem der vorstehenden Ansprüche umsetzen.

**11.** System (30) zur Lageregelung eines Raumfahrzeugs (10), ein Betätigungsuntersystem (300) beinhaltend, das eine Vielzahl von Reaktionsrädern umfasst, wobei das Betätigungsuntersystem (300) umgesetzt wird, um die Lage des Raumfahrzeugs (10) im Laufe mindestens einer Vorbereitungsphase zu regeln, wobei auf die mindestens eine Vorbereitungsphase eine Beobachtungsphase folgt, im Laufe derer eine Aufnahme durchgeführt werden muss, wobei das System (30) eine Steuerungsvorrichtung (350) des Betätigungsuntersystems (300) beinhaltet, konfiguriert, um ein Anhalten der Reaktionsräder vor der Beobachtungsphase durchzuführen, **dadurch gekennzeichnet, dass** die Reaktionsräder des Betätigungsuntersystems (300) derart konfiguriert sind, dass mindestens ein Vektor von Rotationsgeschwindigkeiten vorhanden ist, die nicht alle Null sind, "Kern des Betätigungsuntersystems (300)" genannt, bei denen die Summe der elementaren Dralle, die von jedem der Reaktionsräder generiert werden, im Wesentlichen Null ist, und dadurch, dass die Steuerungsvorrichtung (350) konfiguriert ist, um zu Beginn der mindestens einen Vorbereitungsphase eine Beschleunigung der Reaktionsräder um den Kern des Betätigungsuntersystems (300) zu steuern.

**Claims**

**1.** Method for commanding an attitude control system (30) of a space vehicle (10), the attitude control system (30) comprising a maneuvering subsystem (300) which comprises a plurality of reaction wheels, the attitude of the space vehicle (10) being controlled during at least one preparation phase followed by an observation phase during which an image capture is performed; said method comprising, during the at least one preparation phase:

    - a preparation step (50), during which commands are issued to the maneuvering subsystem (300) in order to control the attitude of the space vehicle (10),
    - followed by a step (55) in which the reaction wheels are stopped, during which the speed of rotation of each reaction wheel is set to a substantially zero value prior to said observation phase,

**characterized in that**, the reaction wheels of the maneuvering subsystem (300) being configured such that there exists at least one vector of rotation speeds, not all equal to zero, called "maneuvering subsystem kernel (300)", for which the sum of the elementary angular momenta generated by each of said reaction wheels is substantially zero, the preparation step (50) comprises, at the start of the at least one preparation phase, a sub-step (500) of accelerating the reaction wheels around the maneuvering subsystem kernel (300).

**2.** Method according to claim 1, **characterized in that** the preparation step (50) comprises a sub-step (504) of decelerating the reaction wheels around the maneuvering subsystem kernel (300), prior to the step (55) of stopping the reaction wheels.

**3.** Method according to one of the preceding claims, **characterized in that** the step (55) in which the reaction wheels are stopped comprises a sub-step (550) of closed-loop deceleration of the reaction wheels.

**4.** Method according to one of the preceding claims, **characterized in that** the step (55) in which the reaction wheels are stopped comprises a sub-step (551) of open-loop braking the reaction wheels.

5. Method according to claim 4, **characterized in that**, in a maneuvering subsystem (300) whose the reaction wheels are driven in rotation by polyphase electric motors, the open-loop braking sub-step (551) consists in short-circuiting the phases of each of said polyphase electric motors.

6. Method according to one of claims 4 to 5, **characterized in that** the open-loop braking sub-step (551) is executed when the speed of rotation of at least one wheel is lower than a predefined threshold.

7. Method according to one of the preceding claims, **characterized in that** the preparation step (50) comprises a maneuvering sub-step (501) during which commands are issued to the maneuvering subsystem (300) to tilt the space vehicle's attitude from one observation attitude to another, and a sub-step (502) during which commands are sent to the maneuvering subsystem (300) to stabilize the space vehicle's (10) attitude around the targeted observation attitude.

8. Method according to one of the preceding claims, **characterized in that** the preparation step (50) comprises a sub-step (503) of unloading the maneuvering subsystem (300), during which all or part of the angular momenta caused by external disturbance torques are compensated for.

9. Method according to one of the preceding claims, **characterized in that** it comprises, during the observation phase, a step (60) of maintaining the reaction wheels stopped, during which the speed of rotation of each reaction wheel is kept at a substantially zero value.

10. Computer program product, **characterized in that** it comprises a set of program code instructions, which, when executed by the microcomputer, implement the control method according to one of the preceding claims.

11. Attitude control system (30) for a space vehicle (10), comprising a maneuvering subsystem (300) comprising a plurality of reaction wheels, said maneuvering subsystem (300) being used to control the space vehicle's (10) attitude during at least one preparation phase, which at least one preparation phase is followed by an observation phase during which an image capture is to be performed, said system (30) comprising a control device (350) of the maneuvering subsystem (300) configured to stop the reaction wheels before said observation phase **characterized in that** the reaction wheels of the maneuvering subsystem (300) are configured such that there exists at least one vector of rotation speeds, not all equal to zero, called "maneuvering subsystem kernel (300)", for which the sum of the elementary angular momenta generated by each of said reaction wheels is substantially zero, and **in that** said control device (350) is configured to control, at the start of the at least one preparation phase, an acceleration of the reaction wheels around the maneuvering subsystem kernel (300).

350

30

300

310   320

20

10

**Fig. 1**

préparation de
l'attitude au moyen
du sous-système
de manoeuvre

50

mise à l'arrêt
des roues
de réaction

55

Phase de
préparation

**Fig. 2a**

préparation de
l'attitude au moyen
du sous-système
de manoeuvre

50

mise à l'arrêt
des roues
de réaction

55

Phase de
préparation

maintien à l'arrêt
des roues
de réaction

60

Phase de
d'observation

**Fig. 2b**

501

manoeuvre en
l'attitude au moyen
du sous-système
de manoeuvre

50

stabilisation de
l'attitude

502

mise à l'arrêt
des roues
de réaction

55

Phase de
préparation

**Fig. 2c**

**Fig. 2d**

**Fig. 2e**

Fig. 3a

Fig. 3b

Fig. 4

## RÉFÉRENCES CITÉES DANS LA DESCRIPTION

**Documents brevets cités dans la description**

- WO 2007077350 A
- US 6758444 B
- FR 2927312